# EUROPÄISCHE PATENTSCHRIFT

(11) **EP 3 817 178 B1**
(45) Veröffentlichungstag und Bekanntmachung des Hinweises auf die Patenterteilung: **22.04.2026**
(21) Anmeldenummer: 19206627.2
(22) Anmeldetag: 31.10.2019
(51) Int. Cl.: H02J 7/00, H02J 7/34, H02J 7/35

(54) **ANORDNUNG ZUM EINSPEISEN ELEKTRISCHER LEISTUNG IN EIN WECHSELSPANNUNGSNETZ**
ARRANGEMENT FOR SUPPLYING ELECTRIC POWER TO AN ALTERNATING CURRENT NETWORK
DISPOSITIF D'ALIMENTATION EN ÉNERGIE ÉLECTRIQUE DANS UN RÉSEAU À TENSION ALTERNATIVE

(43) Veröffentlichungstag der Anmeldung: 05.05.2021
(73) Patentinhaber: Siemens Energy Global GmbH & Co. KG, 81739 München (DE)
(72) Erfinder: Holzapfel, Johann, 2134 Staatz-Kautendorf (AT); Rentschler, Alexander, 64625 Bensheim (DE); Wallner, Christian, 91058 Erlangen (DE)

(56) Entgegenhaltungen:
- WO-A1-2014/181081
- CN-A- 109 921 448
- KR-A- 20180 121 431
- US-A1- 2015 270 801
- US-B1- 6 293 828

## Beschreibung

Die Erfindung betrifft eine Anordnung zum Einspeisen elektrischer Leistung in ein Wechselspannungsnetz.

Die Energieerzeugung aus erneuerbaren Energiequellen stellt eine Herausforderung hinsichtlich der Volatilität der Erzeugung und Qualität der Übertragung dar. Einspeisung als auch Speicherung der erzeugten Energie fordert neue Lösungen für die bestehende Infrastruktur der Wechselspannungsnetze.

Aus dem Stand der Technik ist eine artgemäße Anordnung bekannt, die eine durch eine Energieerzeugungsanlage bereitgestellte Gleichspannung mittels eines Stromrichters in eine Wechselspannung umwandelt und in ein angeschlossenes Wechselspannungsnetz einspeist. Diese Art der Energieeinspeisung wird jedoch den Anforderungen, die sich aus der Volatilität der Energieerzeugung ergeben, nicht gerecht.

Des Weiteren sind Anordnungen zum (Zwischen-)Speichern elektrischer Energie bekannt, die an ein Wechselspannungsnetz anbindbar sind. Aus der EP 3 487 026 A1 ist eine Umrichteranordnung mit einem Umrichter und einer Speicheranordnung bekannt. Der Umrichter ist mit dessen Wechselspannungsseite an das Wechselspannungsnetz anbindbar. Die Speicheranordnung ist mit der Gleichspannungsseite des Umrichters verbunden. Durch Austausch von Wirk- und Blindleistung mit dem Wechselspannungsnetz ist die bekannte Umrichteranordnung zu einer besonders wirksamen Netzstabilisierung geeignet.

Aus der US 2015/0270801 A1 ist eine Speicheranordnung bekannt, die eine Reihenschaltung von Modulen umfasst, die jeweils einen Speicher oder ein PV-Modul umfassen und die gespeicherte bzw. erzeugte Energie in ein AC-Netz einspeisen kann.

Eine weitere Energiespeicher- und Einspeisevorrichtung ist aus der WO 2014/181081 A1 und der CN 109 921 448 A bekannt.

Die Aufgabe der Erfindung ist es, eine eingangs genannte Anordnung vorzuschlagen, die eine möglichst zuverlässige und den Anforderungen der Energieerzeugung insbesondere aus erneuerbaren Energiequellen entsprechende Energieeinspeisung ermöglicht.

Die Aufgabe wird erfindungsgemäß durch eine Anordnung zum Einspeisen elektrischer Leistung in ein Wechselspannungsnetz gelöst, umfassend eine Vielzahl von Einspeisemodulen, wobei jedes Einspeisemodul ein Wandlermodul zum Umwandeln einer (eingangsseitigen) Gleichspannung in eine (ausgangsseitige) Wechselspannung sowie ein Speichermodul zum Speichern elektrischer Energie umfasst, wobei das Speichermodul mit einer Gleichspannungsseite des Wandlermoduls verbunden ist und eine Wechselspannungsseite des Wandlermoduls zum Verbinden mit dem Wechselspannungsnetz und/oder mit wenigstens einem weiteren (zweckmäßigerweise einem in der resultierenden Reihenschaltung benachbarten) der Einspeisemodule eingerichtet ist, so dass die Einspeisemodule wechselspannungsseitig eine mit dem Wechselspannungsnetz verbindbare (im Betrieb der Anordnung mit dem Wechselspannungsnetz verbundene) Reihenschaltung bilden, wobei eines der Speichermodule zum Verbinden mit einer Energieerzeugungsanlage eingerichtet ist. Mit der vorliegenden Erfindung wird demnach eine Anordnung vorgeschlagen, die sowohl direkte Einspeisung erzeugter Energie als auch deren Speicherung ermöglicht. Durch die Integration der Funktionalitäten von Wandlung und Speicherung in der Anordnung kaskadierter Einspeisemodule können die erforderlichen Betriebsmittel reduziert werden, was zudem für betriebsbedingte Verluste ebenfalls gilt. Die mittels der Energieerzeugungsanlage erzeugte Energie wird in zumindest eines der Speichermodule gespeist, die dort gespeicherte Energie kann mittels zumindest eines der Wandlermodule in das ausgangsseitige Wechselspannungsnetz eingespeist, wobei eine Gleichspannung in eine Wechselspannung des Wechselspannungsnetzes umgewandelt werden kann. Die Einspeisemodule sind ausgangsseitig in einer Reihenschaltung verbunden, so dass eine ausgangsseitige Spannung der Summe, der an den einzelnen Einspeisemodulen erzeugten Spannungen entspricht. Ein solcher modularer Aufbau ermöglicht vorteilhaft eine Anpassung an die jeweilige Betriebsspannung des Wechselspannungsnetzes.

Geeigneterweise sind Speichermodule lediglich einiger der Einspeisemodule der Reihenschaltung mit der Energieerzeugungsanlage verbindbar bzw. im Betrieb der Anordnung mit der Energieerzeugungsanlage verbunden. Demnach ist die Anordnung ausschließlich über diese einigen ausgewählten Speichermodule mit der Energieerzeugungsanlage verbunden, so dass die elektrische Energie von der Energieerzeugungsanlage an diese einigen Speichermodule übertragen wird. Die von den einigen der Speichermodule aufgenommene Energie kann auf die übrigen Speichermodule mittels eines Umladens übertragen werden. In diesem Zusammenhang wird von einer kaskadierten Anordnung der Einspeise- bzw. Speichermodule gesprochen. Das Umladen kann beispielsweise zyklisch erfolgen, um eine gleichmäßige Ladungsaufteilung in den Speichermodulen zu erreichen. Die Speichermodule umfassen geeigneterweise Kondensatoren, wobei durch Umladen bzw. Ladungsausgleich eine Kondensatorspannung an den Kondensatoren erzeugt werden kann. Erfindungsgemäß ist nur das Speichermodul eines ersten der Einspeisemodule, d.h. des potenzialniedrigsten Einspeisemoduls mit der Energieerzeugungsanlage verbindbar bzw. im Betrieb verbunden. Aufgrund der kaskadierten Anordnung bzw. der Reihenschaltung der Einspeisemodule befinden sich die Einspeisemodule im Betrieb auf unterschiedlichen Potenzialniveaus. Das erste bzw. das unterste in der Anordnung ist demnach das potenzialniedrigste, d.h. dasjenige, das im Betrieb der Anordnung auf dem niedrigsten Potenzialniveau liegt. Die Anbindung des potenzialniedrigsten Speichermoduls bzw. des Speichermoduls des potenzialniedrigsten Einspeisemoduls an die Energieerzeugungsanlage hat den Vorteil, dass auf diese Weise die Anforderungen an die Isolationsfähigkeit relativ niedrig sind. Die Versorgung der Einspeisemodule selbst mit Energie kann ebenfalls mittels Kaskadierung erfolgen.

Geeigneterweise sind die Einspeisemodule zu einem Austausch elektrischer Energie untereinander eingerichtet. Durch Ladungsausgleich zwischen den Einspeise- bzw. Speichermodulen kann eine gleichmäßige Auslastung der Speichermodule sowie ggf. die bereits beschriebene Kaskadierung erreicht werden.

Vorzugsweise weist jedes der Einspeisemodule ein Balancierungsmodul zum Austausch elektrischer Energie mit übrigen Einspeisemodulen auf, wobei das Balancierungsmodul abschaltbare Halbleiterschalter umfasst und der Energieaustausch mittels Steuerung der Halbleiterschalter durchgeführt wird. Die Halbleiterschalter, z.B. IGBT, IGCT oder andere geeignete Leistungshalbleiter, können beispielsweise derart mit dem elektrischen Schalter des Speichermoduls verschaltet sein, dass mittels geeigneter Schalteroperationen der Speicher mit einem benachbarten Speicher elektrisch verbunden oder überbrückt wird.

Vorzugsweise ist die Anbindung der Anordnung an das Wechselspannungsnetz transformatorlos. Demnach ist die Anordnung bzw. die Reihenschaltung der Einspeisemodule im Betrieb direkt, d.h. ohne einen zwischengeschalteten Transformator, mit dem Wechselspannungsnetz verbunden. Die Anpassung der Spannung erfolgt ausschließlich durch Anordnung mittels der Wandlermodule, auf den Transformator kann damit vorteilhaft verzichtet werden. Dies erleichtert vorteilhaft die Wartung der Anordnung während deren Betrieb.

Zweckmäßigerweise umfasst die Anordnung eine Tragestruktur, die zur Aufnahme der Einspeisemodule eingerichtet ist. Die Tragestruktur kann beispielsweise in Form eines Turmes ausgebildet sein, in dem die einzelnen Einspeisemodule übereinander und/oder nebeneinander angeordnet sind. Für jedes Stabilisierungsmodul kann in der Tragestruktur ein Einbauplatz vorgesehen sein. Der Einbauplatz kann mit entsprechenden Anschlüssen ausgestattet sein, so dass das Einspeisemodul unter Ausbildung der elektrischen Kontakte der Reihenschaltung der Einspeisemodule in die Tragestruktur eingesetzt werden bzw. unter Trennung der Kontakte aus der Tragestruktur entfernt werden. Geeigneterweise ist das Einspeisemodul im Betrieb in den Modulhalter eingesetzt.

Gemäß einer Ausführungsform der Erfindung ist in der Tragestruktur jedem Einspeisemodul ein Modulhalter zugeordnet, wobei der Modulhalter einen Modulkurzschließer aufweist, der zum Kurzschließen des zugeordneten Einspeisemoduls eingerichtet ist. Der Modulkurzschließer ist dazu eingerichtet, das zugeordnete Einspeisemodul zu überbrücken. Auf diese Weise kann die Vorrichtung auch in einem Fehlerfall eines der Einspeisemodule weiter betrieben werden, indem das fehlerhafte Einspeisemodul mittels des Modulkurzschließers in der Reihenschaltung der Einspeisemodule überbrückt wird. Der Modulkurzschließer kann beispielsweise einen mechanischen Schalter umfassen. Der Modulkurzschließer kann steuerbar sein oder über eine automatische Auslösung verfügen. Die Einspeisemodule sind vorzugsweise einzeln aus der Tragestruktur herausnehmbar.

Bevorzugt ist wenigstens eines der Einspeisemodule mit der Tragestruktur mittels ausfahrbarer Kontakte mit einem Berührungsschutz verbindbar, so dass das Einspeisemodul während des Betriebs der Vorrichtung aus der Tragestruktur herausnehmbar ist. Der Berührungsschutz kann ein sicheres Entfernen des Einspeisemoduls gewährleisten. Vorteilhaft wird hierdurch erreicht, dass auch bei einem Fehler eines der Einspeisemodule der Betrieb der Anordnung nicht unterbrochen werden muss.

Vorzugsweise ist ein Potenzialunterschied zwischen benachbarten Einspeisemodulen der Reihenschaltung kleiner als 5 kV, vorzugsweise kleiner als 2 kV. Durch die Reihenschaltung bzw. Kaskadierung der Einspeisemodule kann eine grundsätzlich beliebige, an die jeweilige Anwendung angepasste Gesamtspannung erzeugt werden, ohne die Isolationsanforderungen der Anordnung wesentlich zu erhöhen.

Gemäß einer Ausführungsform der Erfindung umfasst jedes Einspeisemodul ein Elektronikmodul zur Datenerfassung und/oder Datenaustausch von Betriebsdaten des jeweiligen Einspeisemoduls. Eine Datenerfassung der Betriebsdaten erfolgt beispielsweise mittels geeigneter Messvorrichtungen. Die Betriebsdaten können an eine zentrale Datenerfassungseinrichtung übermittelt werden. Die Betriebsdaten können vorteilhaft zu einer Überwachung der Einspeisemodule verwendet werden. Ferner erlaubt der Datenaustausch die Steuerung bzw. Regelung der Spannungsbalancierung der Anordnung.

Es wird als vorteilhaft angesehen, wenn die Anordnung eine Energieerzeugungsanlage umfasst, die mit einem der Speichermodule verbunden ist, so dass die mittels der Energieerzeugungsanlage erzeugte Energie in dem Speichermodul zwischengespeichert werden kann. Somit ist eine Anordnung zum Erzeugen und Einspeisen elektrischer Energie bereitgestellt, mittels der Schwankungen in der Energieerzeugung ausgeglichen sowie eine (vor allem kurzzeitige) Stabilisierung/Stützung des Wechselspannungsnetzes erreicht werden kann.

Geeigneterweise ist die Energieerzeugungsanlage eine PV-Anlage oder eine Windkraftanlage. Eine PV-Anlage (Photovoltaik-Anlage) ist besonders geeignet, weil diese üblicherweise eine Gleichspannung liefert, die mittels der Anordnung direkt in die Wechselspannung des Wechselspannungsnetzes umgewandelt werden kann.

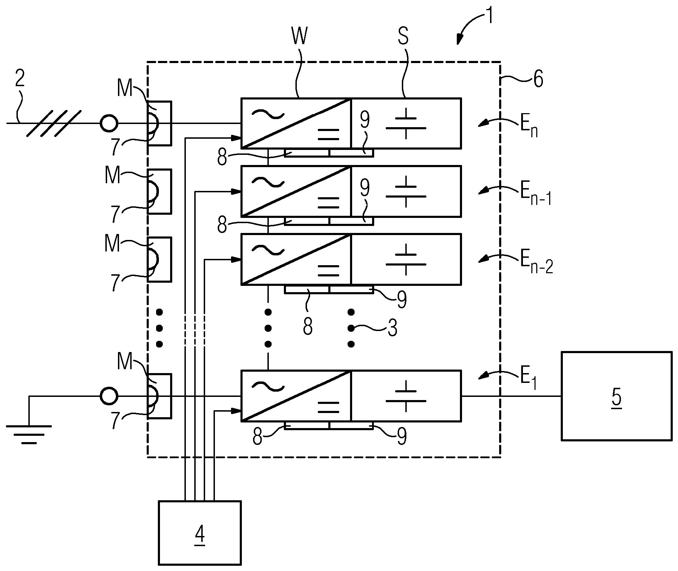

Die Erfindung wird im Folgenden anhand eines in der Figur dargestellten Ausführungsbeispiels weiter erläutert.

Die Figur zeigt ein Ausführungsbeispiel einer erfindungsgemäßen Anordnung in einer schematischen Darstellung.

Die Figur zeigt eine Anordnung 1 zum Einspeisen elektrischer Energie in ein Wechselspannungsnetz 2. Die Anordnung 1 umfasst Einspeisemodule E1...En, wobei die Anzahl der Einspeisemodule grundsätzlich beliebig sein kann, was durch eine punktierte Linie 3 angedeutet ist. Jedes Einspeisemodul E1...En umfasst ein Speichermodul S sowie ein Wandlermodul W. Ein Balancierungsmodul ist im dargestellten Beispiel in das Speichermodul S integriert. In dem Ausführungsbeispiel der Figur sind alle Einspeisemodule E1...En gleichartig aufgebaut, was jedoch im Allgemeinen Fall nicht notwendig ist. Ein Elektronikmodul 8 zum Erfassen und Austauschen von Betriebsdaten mit einer zentralen Steuerungseinrichtung 4 ist im dargestellten Beispiel in das Wandlermodul W integriert.

Die Wandlermodule W weisen jeweils eine Wechselspannungssseite sowie eine Gleichspannungsseite auf. Auf der Wechselspannungsseite sind die Wandlermodule W miteinander in einer Reihenschaltung sowie mit dem Wechselspannungsnetz 2 verbunden. Auf der Gleichspannungsseite ist jedes Wandlermodul W mit dem zugeordneten Speichermodul S verbunden.

Das Speichermodul des ersten beziehungsweise potenzialniedrigsten Einspeisemoduls E1 ist mit einer Energieerzeugungsanlage 5 in Form einer PV-Anlage verbunden. Die von der Energieerzeugungsanlage 5 bereitgestellte elektrische Energie wird in dem Speichermodul S des ersten Einspeisemoduls E1 (bzw. dessen Speicherkondensator) gespeichert und auf die anderen Speichermodule mittels eines Ladungsausgleichs verteilt. Mittels jedes Wandlermoduls W kann die im zugeordneten Speichermodul S gespeicherte Energie (in Form einer Gleichspannung) in Wechselspannung umgewandelt und in das Wechselspannungsnetz 2 eingespeist werden.

Die Anordnung 1 umfasst ferner eine Tragestruktur 6, in der die Einspeisemodule E1...En im Betrieb angeordnet sind. Für jeden der Einspeisemodule E1...En ist in der Tragestruktur 6 ein eigener Einbauplatz vorgesehen. Die Einspeisemodule E1...En werden in einen dazu vorgesehenen Modulhalter M eingesetzt, der einen Modulkurzschließer 7 umfasst, mittels dessen ein fehlerhaftes Einspeisemodul E1...En überbrückt werden kann. Der Modulhalter M umfasst ferner Einrichtungen wie Berührungsschutz und ausfahrbare Kontakte, die es erlauben, das fehlerhafte Einspeisemodul aus der Tragestruktur 6 herauszulösen, ohne den Betrieb der Anordnung unterbrechen zu müssen.

Mittels eines Balancierungsmoduls 9 kann jedes der Einspeisemodule E1...En Energie mit den übrigen Einspeisemodulen austauschen.

## Patentansprüche

1. Anordnung (1) zum Einspeisen elektrischer Leistung in ein Wechselspannungsnetz (2) mit einer Vielzahl von Einspeisemodulen (E1...En), wobei jedes Einspeisemodul (E1...En) ein Wandlermodul (W) zum Umwandeln einer Gleichspannung in eine Wechselspannung sowie ein Speichermodul (S) zum Speichern elektrischer Energie umfasst, wobei das Speichermodul (S) mit einer Gleichspannungsseite des Wandlermoduls (W) verbunden ist und eine Wechselspannungsseite des Wandlermoduls zum Verbinden mit dem Wechselspannungsnetz (2) und/oder mit wenigstens einem weiteren der Einspeisemodule (E1...En) eingerichtet ist, so dass die Einspeisemodule (E1...En) wechselspannungsseitig eine mit dem Wechselspannungsnetz (2) verbindbare Reihenschaltung bilden, wobei eines der Speichermodule zum Verbinden mit einer Energieerzeugungsanlage eingerichtet ist, wobei nur das Speichermodul eines potenzialniedrigsten Einspeisemoduls mit der Energieerzeugungsanlage im Betrieb der Anordnung verbunden ist.

2. Anordnung (1) nach Anspruch 1, wobei Speichermodule lediglich einiger der Einspeisemodule der Reihenschaltung, vorzugsweise nur das Speichermodul eines ersten der Einspeisemodule mit der Energieerzeugungsanlage verbindbar sind bzw. ist.

3. Anordnung (1) nach einem der vorangehenden Ansprüche, wobei die Einspeisemodule (E1...En) zu einem Austausch elektrischer Energie untereinander eingerichtet sind.

4. Anordnung (1) nach Anspruch 3, wobei jedes der Einspeisemodule (E1...En) ein Balancierungsmodul zum Austausch elektrischer Energie mit übrigen Einspeisemodulen aufweist, wobei das Balancierungsmodul (9) abschaltbare Halbleiterschalter umfasst und der Energieaustausch mittels Steuerung der Halbleiterschalter durchgeführt wird.

5. Anordnung (1) nach einem der vorangehenden Ansprüche, wobei die Anbindung der Anordnung (1) an das Wechselspannungsnetz (2) transformatorlos ist.

6. Anordnung (1) nach einem der vorangehenden Ansprüche, wobei die Anordnung eine Tragestruktur (6) umfasst, die zur Aufnahme der Einspeisemodule (E1...En) eingerichtet ist.

7. Anordnung (1) nach Anspruch 6, wobei in der Tragestruktur (6) jedem Einspeisemodul (E1...En) ein Modulhalter (M) zugeordnet ist, wobei der Modulhalter (M) einen Modulkurzschließer (7) aufweist, der zum Kurzschließen des zugeordneten Einspeisemoduls (E1...En) eingerichtet ist.

8. Anordnung (1) nach Anspruch 6 oder 7, wobei wenigstens eines der Einspeisemodule (E1...En) mit der Tragestruktur (6) mittels ausfahrbarer Kontakte mit einem Berührungsschutz der Anordnung verbindbar ist, so dass das Einspeisemodul (E1...En) während des Betriebs der Vorrichtung aus der Tragestruktur (6) herausnehmbar ist.

9. Anordnung (1) nach einem der vorangehenden Ansprüche, wobei ein Potenzialunterschied zwischen benachbarten Einspeisemodulen (E1...En) der Reihenschaltung kleiner als 5 kV, vorzugsweise kleiner als 2 kV ist.

10. Anordnung (1) nach einem der vorangehenden Ansprüche, wobei jedes Einspeisemodul ein Elektronikmodul (8) zur Datenerfassung und/oder Datenaustausch von Betriebsdaten des jeweiligen Einspeisemoduls (E1...En) umfasst.

11. Anordnung (1) nach einem der vorangehenden Ansprüche, wobei die Anordnung (1) eine Energieerzeugungsanlage (5) umfasst, die mit wenigstens einem der Speichermodule (S) verbunden ist, so dass die mittels der Energieerzeugungsanlage (5) erzeugte Energie in dem wenigstens einem Speichermodul (S) zwischengespeichert werden kann.

12. Anordnung (1) nach Anspruch 11, wobei die Energieerzeugungsanlage eine PV-Anlage oder eine Windkraftanlage ist.

## Claims

1. An arrangement (1) for supplying electric power to an alternating current network (2) with a plurality of supply modules (E1...En), wherein each supply module (E1...En) comprises a converter module (W) for converting a DC voltage into an AC voltage and a storage module (S) for storing electrical energy, wherein the storage module (S) is connected to a DC voltage side of the converter module (W), and an AC voltage side of the converter module is configured for connecting to the alternating current network (2) and/or to at least one further one of the supply modules (E1...En) such that the supply modules (E1...En) form a series circuit connectable to the alternating current network (2) on the AC voltage side, wherein one of the memory modules is configured for connecting to an energy generating system, wherein only the storage module of a supply module having a lowest potential is connected to the energy generating system during operation of the arrangement.

2. The arrangement (1) according to claim 1, wherein storage modules of only some of the supply modules of the series circuit, preferably only the storage module of a first of the supply modules, are connectable to the energy generating system.

3. The arrangement (1) according to any one of the preceding claims, wherein the supply modules (E1...En) are configured to exchange electric energy between one another.

4. The arrangement (1) according to claim 3, wherein each of the supply modules (E1...En) has a balancing module for exchanging electrical energy with other supply modules, wherein the balancing module (9) comprises semiconductor switches which can be switched off, and the energy exchange is performed by controlling the semiconductor switches.

5. The arrangement (1) according to any one of the preceding claims, wherein the connection of the arrangement (1) to the alternating current network (2) is transformerless.

6. The arrangement (1) according to any one of the preceding claims, wherein the arrangement comprises a support structure (6) configured for receiving the supply modules (E1...En).

7. The arrangement (1) according to claim 6, wherein a module holder (M) is associated with each supply module (E1...En) in the support structure (6), wherein the module holder (M) has a module short-circuiter (7) configured for short-circuiting the associated supply module (E1...En).

8. The arrangement (1) according to claim 6 or 7, wherein at least one of the supply modules (E1...En) is connectable to the support structure (6) by means of extendable contacts to a touch protection of the arrangement such that the supply module (E1... En) is removable from the support structure (6) during operation of the device.

9. The arrangement (1) according to any one of the preceding claims, wherein a potential difference between adjacent supply modules (E1...En) of the series circuit is less than 5 kV, preferably less than 2 kV.

10. The arrangement (1) according to any one of the preceding claims, wherein each supply module comprises an electronic module (8) for data collection and/or data exchange of operating data of the respective supply module (E1...En).

11. The arrangement (1) according to any one of the preceding claims, wherein the arrangement (1) comprises an energy generating system (5) connected to at least one of the storage modules (S) such that the energy generated by meany of the energy generating system (5) can be temporarily stored in the at least one storage module (S).

12. The arrangement (1) according to claim 11, wherein the energy generating system is a PV system or a wind turbine.

## Revendications

1. Dispositif (1) d'injection de puissance électrique dans un réseau à tension alternative (2) comprenant une pluralité de modules d'injection (E1...En), dans lequel chaque module d'injection (E1...En) comprend un module convertisseur (W) pour convertir une tension continue en une tension alternative ainsi qu'un module de stockage (S) pour le stockage d'énergie électrique, le module de stockage (S) étant relié à un côté tension continue du module convertisseur (W), et un côté tension alternative du module convertisseur étant configuré pour être relié au réseau à tension alternative (2) et/ou à au moins un autre des modules d'injection (E1...En), de sorte que les modules d'injection (E1...En) forment, côté tension alternative, un circuit série pouvant être relié au réseau à tension alternative (2), dans lequel l'un des modules de stockage
est configuré pour être relié à une installation de génération d'énergie, dans lequel seul le module de stockage d'un module d'injection au potentiel le plus bas est relié à l'installation de génération d'énergie lors du fonctionnement du dispositif.

2. Dispositif (1) selon la revendication 1, dans lequel des modules de stockage de seulement certains des modules d'injection du circuit série, de préférence uniquement le module de stockage d'un premier des modules d'injection, peuvent être reliés ou, respectivement, est relié à l'installation de génération d'énergie.

3. Dispositif (1) selon l'une des revendications précédentes, dans lequel les modules d'injection (E1...En) sont configurés pour échanger de l'énergie électrique entre eux.

4. Dispositif (1) selon la revendication 3, dans lequel chacun des modules d'injection (E1...En) présente un module d'équilibrage pour l'échange d'énergie électrique avec les autres modules d'injection, dans lequel le module d'équilibrage (9) comprend des commutateurs à semi-conducteurs pouvant être coupés et l'échange d'énergie est effectué au moyen d'une commande des commutateurs à semi-conducteurs.

5. Dispositif (1) selon l'une des revendications précédentes, dans lequel le raccordement du dispositif (1) au réseau à tension alternative (2) est sans transformateur.

6. Dispositif (1) selon l'une des revendications précédentes, dans lequel le dispositif comprend une structure porteuse (6) configurée pour recevoir les modules d'injection (E1...En).

7. Dispositif (1) selon la revendication 6, dans lequel, dans la structure porteuse (6), un support de module (M) est associé à chaque module d'injection (E1...En), dans lequel le support de module (M) présente un court-circuiteur de module (7) qui est configuré pour court-circuiter le module d'injection (E1...En) associé.

8. Dispositif (1) selon la revendication 6 ou 7, dans lequel au moins l'un des modules d'injection (E1...En) peut être relié à la structure porteuse (6) au moyen de contacts escamotables avec une protection contre les contacts directs du dispositif, de sorte que le module d'injection (E1...En) peut être retiré de la structure porteuse (6) pendant le fonctionnement du dispositif.

9. Dispositif (1) selon l'une des revendications précédentes, dans lequel une différence de potentiel entre des modules d'injection (E1...En) adjacents du circuit série est inférieure à 5 kV, de préférence inférieure à 2 kV.

10. Dispositif (1) selon l'une des revendications précédentes, dans lequel chaque module d'injection comprend un module électronique (8) pour la saisie de données et/ou l'échange de données de fonctionnement du module d'injection (E1...En) respectif.

11. Dispositif (1) selon l'une des revendications précédentes, dans lequel le dispositif (1) comprend une installation de génération d'énergie (5) qui est reliée à au moins l'un des modules de stockage (S), de sorte que l'énergie générée au moyen de l'installation de génération d'énergie (5) puisse être stockée de manière intermédiaire dans ledit au moins un module de stockage (S).

12. Dispositif (1) selon la revendication 11, dans lequel l'installation de génération d'énergie est une installation photovoltaïque ou une éolienne.
